# EUROPÄISCHE PATENTSCHRIFT

(11) **EP 1 618 771 B1**
(45) Veröffentlichungstag und Bekanntmachung des Hinweises auf die Patenterteilung: **31.03.2010**
(21) Anmeldenummer: 04017629.9
(22) Anmeldetag: 23.07.2004
(51) Int. Cl.: A01B 45/02

(54) **Landschaftspflegegerät**
Landscaping apparatus
Appareil pour l'aménagement paysager

(43) Veröffentlichungstag der Anmeldung: 25.01.2006
(73) Patentinhaber: Julius Tielbürger GmbH & Co. KG, D-32351 Stemwede-Oppenwehe (DE)
(72) Erfinder: Tielbürger, Jörg, 32351 Stemwede-Oppenwehe (DE)
(74) Vertreter: Dantz, Jan Henning

(56) Entgegenhaltungen:
- DE-A- 2 834 057
- GB-A- 1 427 718
- US-A- 2 902 098
- US-A- 3 439 747
- US-A- 5 279 014

## Beschreibung

Die Erfindung betrifft ein Landschaftspflegegerät, insbesondere einen Vertikutierer, mit einem Maschinengehäuse, welches zwei beabstandete Seitenwände aufweist, zwischen denen eine mit Werkzeugen bestückte, rotierend antreibbare Werkzeugwelle verläuft, deren Stirnenden in Lagern gelagert sind, siehe z.B. DE-A-28 34 057.

Das in Rede stehende Landschaftspflegegerät ist in bevorzugter Ausführung ein Vertikutierer. Ein solches Landschaftspflegegerät ist mit einem Fahrantrieb und einem Antrieb für die Werkzeugwelle ausgestattet. Die Werkzeugwelle wird mit einer relativ hohen Drehzahl angetrieben, da beispielsweise bei einem Vertikutierer die Welle mit Messern bestückt ist, um Gras, Gestrüpp und ähnliche Pflanzen abzuschlagen. Die Werkzeuge unterliegen einem relativ hohen Verschleiß, so dass die Werkzeuge geschliffen werden müssen. Darüber hinaus ist es unvermeidbar, dass beim Arbeiten mit dem Landschaftspflegegerät durch harte Fremdgegenstände ein Teil der Werkzeuge beschädigt wird. Es ist dann notwendig, dass die mit defekten Werkzeugen bestückte Werkzeugwelle ausgetauscht wird, damit die Arbeiten weiterhin durchgeführt werden können.

Bei den bislang bekannten Landschaftspflegegeräten sind die Lager für die Werkzeugwelle in den Seitenwänden des Maschinengehäuses in passgenauen Bohrungen eingesetzt. Außenseitig sind dann an die Seitenwände Lagerdeckel angeschraubt. Das Wechseln einer Werkzeugwelle ist demzufolge recht aufwendig. Insbesondere stehen bei einem unerwarteten Wechsel infolge beschädigter Werkzeuge häufig vor Ort nicht die geeigneten Werkzeuge zur Verfügung.

Der Erfindung liegt die Aufgabe zugrunde, ein Landschaftspflegegerät der eingangs näher beschriebenen Art so zu gestalten, dass das Auswechseln der Werkzeugwelle ohne Zuhilfenahme oder weitgehend ohne Zuhilfenahme von Werkzeugen durchführbar ist und dass die zum Wechseln der Werkzeugwelle notwendige Zeit minimiert wird.

Die gestellte Aufgabe wird wie beansprucht gelöst. Da nunmehr die Lager der Werkzeugwelle in den Lagerplatten gelagert sind, kann ein Wechsel erfolgen, indem die Positioniereinrichtung sinngemäß außer Betrieb gesetzt wird. Bei einer entsprechenden Auslegung kann dies ohne Werkzeuge, beispielsweise mit einem Schlüssel oder dergleichen, erfolgen. Nachdem die Positioniereinrichtung funktionslos ist, kann die aus der Werkzeugwelle und den Lagerplatten gebildete Einheit aus dem nach unten offenen Maschinengehäuse herausgenommen werden. Die Lager sind dann besonders gut zugänglich, so dass entweder die Stirnenden der Werkzeugwelle aus den Lagern herausgezogen werden können oder dass die Lager auf den Stirnenden verbleiben, so dass die Lager der ausgewechselten Werkzeugwelle in die Lagerbohrungen der Lagerplatten eingesetzt werden. Es ergibt sich aus dieser Gestaltung, dass die Zeit zum Wechseln der Werkzeugwelle äußerst gering ist.

In weiterer Ausgestaltung ist vorgesehen, dass die Lagerplatten den Innenflächen der Seitenwände des Maschinengehäuses zugeordnet sind und dass sie vorzugsweise daran anliegen. Die innen liegende Anordnung der Lagerplatten hat den Vorteil, dass außen keine Kanten entstehen, so dass die Außenflächen des Maschinengehäuses weitgehend glattflächig sind. Bei der anliegenden Ausführung ist es vorteilhaft, dass zwischen den Lagerplatten und den Innenflächen der Seitenwände keine Spalte entstehen, in die sich Schmutz oder sonstiges Gut absetzen kann.

Die Lagerplatten sind aufgrund der abzutragenden Kräfte langgestreckte Bauteile und an den beiden Stirnenden zur formschlüssigen Verbindung an den Stirnenden mit nach außen offenen Ausnehmungen versehen. Aufgrund des relativ langen Hebelarmes werden dann die Kräfte entsprechend gering. Ein Stirnende ist mit offenen Ausnehmungen versehen, so dass diese Ausnehmungen auf Bolzen aufsetzbar sind, die in den Seitenwänden festgesetzt sind. Die gegenüberliegenden Stirnwände sind ebenfalls mit offenen Ausnehmungen versehen, durch die eine die beiden Lagerplatten verbindende Verbindungsstange verläuft, deren Stirnenden in nach unten offenen Ausnehmungen der Seitenwände des Maschinengehäuses eingreifen. Dadurch wird sinngemäß durch die Werkzeugwelle, durch die Lagerplatten und der Verbindungsstange ein in sich stabiler Rahmen geschaffen. Die Fixierung der Lagerplatten gegenüber den Seitenwänden des Maschinengehäuses erfolgt durch die Positioniereinrichtung, die an die Verbindungsstange angreift. Damit die Werkzeugwelle zum Wechseln gut zugänglich ist, ist vorgesehen, dass die in das eine Ende Stimende eingreifenden Bolzen, in Fahrtrichtung des Landschaftspflegegerätes gesehen, hinter der Werkzeugwelle und die Positioniereinrichtung und die Verbindungsstange demzufolge vor der Werkzeugwelle liegen.

Damit die Lager der Werkzeugwelle durch eine Verkantung nicht vorzeitig verschleißen, ist vorgesehen, dass der Verbindungsstange eine Ausrichtvorrichtung zugeordnet ist. Diese Vorrichtung besteht in einfachster Weise darin, dass die Endbereiche der Verbindungsstange mit Gewinde versehen sind, auf die beidseitig der Lagerplatten Muttern aufgedreht sind. Da diese wie Kontermuttern arbeiten, ist im laufenden Betrieb keine Verschiebung bzw. Verdrehung möglich. Die Positioniereinrichtung greift in bevorzugter Ausführung im mittleren Bereich an die Verbindungsstange an. Die Verbindungsstange dient zur Ausrichtung der Parallelität der Lagerplatten, um die Lager der Werkzeugwelle parallel einstellen zu können. Die durch die Muttern gebildete Einschraubung ermöglicht darüber hinaus, dass die Lager und somit auch die Werkzeugwelle nachgestellt werden kann. Damit stets die gleiche Position für die Werkzeugwelle eingehalten wird, ist vorgesehen, dass an den Innenfläche der Seitenwandungen des Maschinengehäuses Anschläge angesetzt oder angeformt sind, gegen die die Lagerplatten durch die Positioniereinrichtung gezogen werden. Die Positioniereinrichtung besteht im wesentlichen aus einem die Verbindungsstange hintergreifenden Fanghaken, der mit seinem anderen Ende mit einen Klemmhebel in Wirkverbindung steht. Der Klemmhebel ist ein maschinenfestes Teil und zieht die aus den Lagerschalen, der Werkzeugwelle und der Verbindungsstange gebildete Einheit gegen die ortsfesten Anschläge an den Innenflächen der Seitenteile des Maschinengehäuses. Das freie Ende des Fanghakens kann mit einem Gewinde versehen sein, so dass noch eine Justierung oder auch eine sonstige Einstellung möglich ist. Damit im Bereich der Lagerung der Werkzeugwelle die Lagerplatten ausreichend dimensioniert sind, ist vorgesehen, dass sie an dieser Stelle mit nach oben sich erstreckenden Erhöhungen versehen sind. Die Seitenwände des Maschinengehäuses weisen in diesem Bereich entsprechend gestaltete, nach unten offene Ausnehmungen auf, so dass die besagte Einheit nach unten aus dem Maschinengehäuse herausgenommen werden kann, nachdem die Positioniereinrichtung wirkungslos gemacht wurde. Damit die aus den Lagerschalen, der Werkzeugwelle und der Verbindungsstange gebildete Einheit bequem getragen werden kann, ist vorgesehen, dass in den Lagerplatten nach außen sich erstreckende Traggriffe oder Tragbügel angesetzt sind.

Die die Lagerplatten verbindende Verbindungsstange muss in den Stimendbereichen nicht zwingend mit einem Gewinde versehen sein, sondern die Endbereiche könnten mit den Lagerplatten auch verschweißt sein. Es entfällt dann allerdings die Nachstellmöglichkeit, allerdings bleibt die Möglichkeit der Ausrichtung der Parallelität der Lagerplatten erhalten.

Anhand der beiliegenden Zeichnungen wird die Erfindung noch näher erläutert. Es zeigen:
- Figur 1: den Werkzeugteil eines erfindungsgemäßen Landschaftspflegegerätes in Form eines Vertikutierers in einer perspektivischen Unteransicht, und
- Figur 2 und 3: die unbestückte Werkzeugwelle einschließlich der Lagerplatten und der Verbindungsstange und der Positioniereinrichtung in perspektivischer Darstellung in zwei verschiedenen Ansichten.

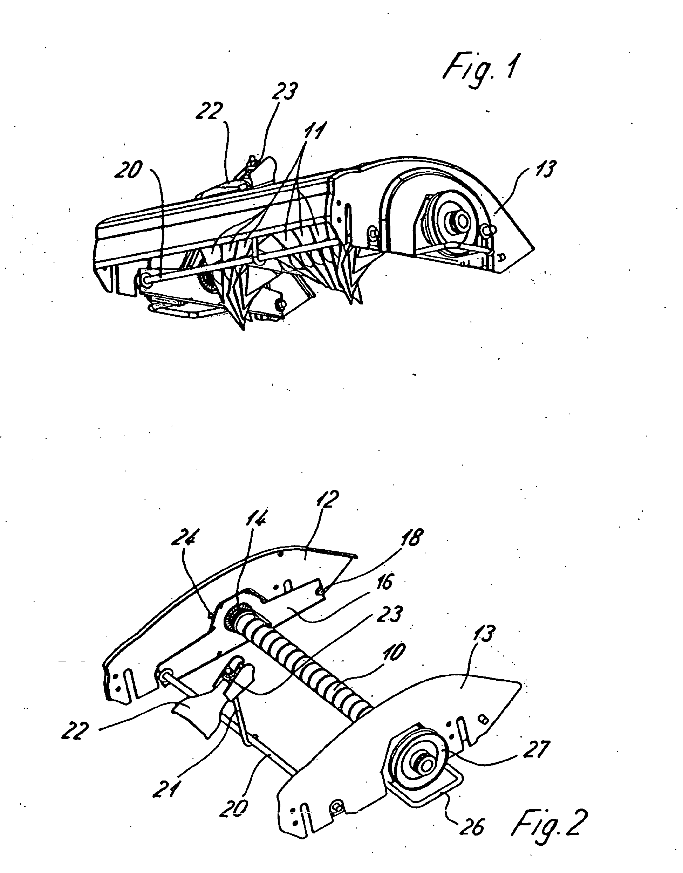

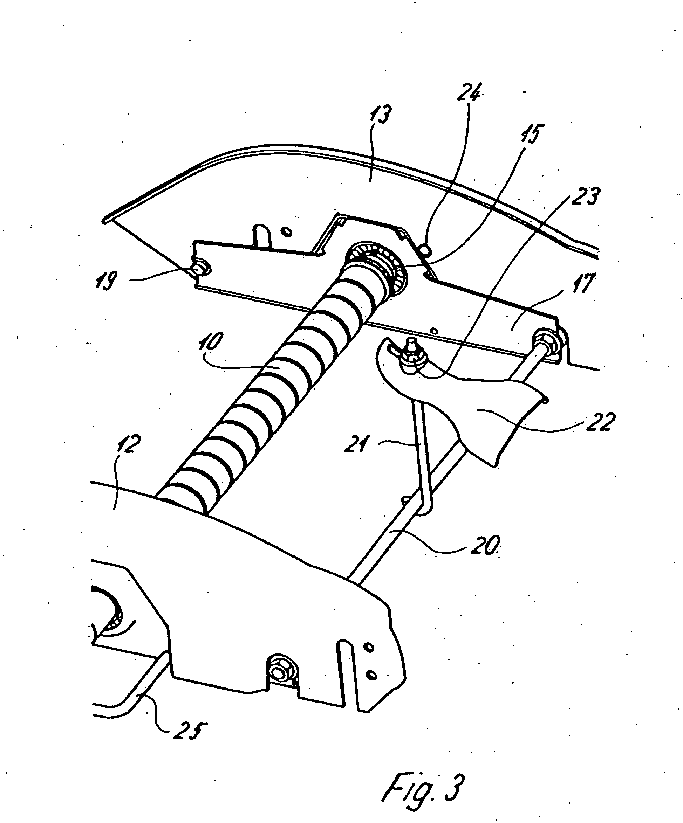

Die Figur 1 zeigt, dass die in den Figuren 2 und 3 sichtbare Werkzeugwelle 10 mit einer Vielzahl von nicht näher erläuterten Werkzeugen 11 in Form von Messern bestückt ist. Die Werkzeugwelle 10 verläuft zwischen den Seitenwänden 12, 13 des Maschinengehäuses. Wie insbesondere die Figuren 2 und 3 zeigen, ist die Werkzeugwelle 10 mit ihren Stirnenden in Wälzlagern 14, 15 gelagert. Diese Wälzlager 14, 15 sind in Lagerbohrungen von zwei Lagerplatten 16, 17 eingesetzt, die innenseitig an die Seitenwände 12, 13 des Maschinengehäuses anliegen. Die Lagerplatten 16 sind langgestreckte Bauteile und im Bereich der Wälzlager 14, 15 mit nach oben sich erstreckenden Erhöhungen versehen, damit eine ausreichende Stabilität gegeben ist. Die Lagerplatten 16, 17 sind an beiden Stirnenden mit nach außen offenen halbkreisförmigen oder U-förmigen Ausnehmungen versehen. In den in Fahrtrichtung hinten liegenden Ausnehmungen greifen Bolzen 18, 19 schließend ein, so dass diese Stirnenden formschlüssig mit den Seitenwänden 12, 13 verbunden sind. Durch die gegenüberliegenden, in Fahrtrichtung vom liegenden Ausnehmungen ist eine Verbindungsstange 20 geführt, die sich bis in den Bereich von nach unten offenen halbkreisförmigen oder U-förmigen Ausnehmungen in den Seitenwänden 12, 13 erstreckt. An die Verbindungsstange 20 greift eine Positioniereinrichtung an, die im wesentlichen aus einem Fanghaken 21 und einer Klemmhebel 22 besteht. Die Figur 1 zeigt, dass die Klemmhebel 22 außerhalb des Maschinengehäuses liegt, so dass der Fanghaken 21 durch eine Öffnung des Maschinengehäuses hindurchgeführt ist. Der dem Klemmhebel 22 zugeordnete Bereich des Fanghakens 21 ist mit einem Gewinde versehen, so dass durch eine aufgeschraubte Mutter 23 die bereits erwähnte Einheit positioniert werden kann. Dazu sind an den Innenflächen der Seitenwände 12, 13 Anschläge 24 angesetzt oder angeformt.

Wie die Figuren zeigen, sind die Seitenwände 12, 13 im Bereich der Werkzeugwelle 10 mit Ausnehmungen versehen, die nach unten offen sind und der Kontur der Lagerplatten 16, 17 in diesem Bereich angepasst sind. Nachdem die Positioniereinrichtung 21, 22 wirkungslos ist, kann die besagte Einheit nach unten aus dem Maschinengehäuse herausgenommen werden. Dazu sind in die Lagerplatten 16 nach außen sich erstreckende Tragebügel 25, 26 eingesetzt, die auch Handgriffe sein könnten. Die Figuren 1 und 2 zeigen, dass ein Stimende der Werkzeugwelle 10 bis außerhalb der Seitenwand 13 geführt ist und dass darauf eine Antriebsscheibe 27 drehfest aufgesetzt ist.

Die Erfindung ist nicht auf das dargestellte Ausführungsbeispiel beschränkt. Wesentlich ist, dass aus der Werkzeugwelle 10, den beiden formschlüssig an den Seitenwänden 12, 13 des Maschinengehäuses festgelegten Lagerplatten 16, 17 und der Verbindungsstange 20 gebildete Einheit ohne wesentliche Zuhilfenahme von Werkzeugen ausgewechselt werden kann. Ferner ist wichtig, dass eine genaue Positionierung dieser Einheit des Maschinengehäuses sichergestellt ist.

### Bezugszeichen

- 10: Werkzeugwelle
- 11: Werkzeuge
- 12, 13: Seitenwände
- 14, 15: Wälzlager
- 16, 17: Lagerplatten
- 18, 19: Bolzen
- 20: Verbindungsstange
- 21: Fanghaken
- 22: Klemmhebel
- 23: Mutter
- 24: Anschläge
- 25,26: Tragebügel
- 27: Antriebsscheibe

## Patentansprüche

1. Landschaftspflegegerät, insbesondere ein Vertikutierer, mit einem Maschinengehäuse, welches zwei beabstandete Seitenwände (12, 13) aufweist, zwischen denen eine mit Werkzeugen (11) bestückte, rotierend antreibbare Werkzeugwelle (10) verläuft, deren Stirnenden in Lagern (14, 15) gelagert sind, **dadurch gekennzeichnet, dass** die Lager (14, 15) der Werkzeugwelle (10) in Lagerplatten (16, 17) eingesetzt sind, die formschlüssig an den Seitenwänden (12, 13) des Maschinengehäuses gehalten sind, und mittels einer positioniereinrichtung (21,22) gegenüber den Seitenwänden (12,13) lagerecht fixiert sind, und dass die Positioniereinrichtung (21, 22) im Wesentlichen aus einem Fanghaken (21) und einem ortsfesten Klemmhebel (22) gebildet ist, der vorzugsweise außenseitig am Maschinengehäuse befestigt ist.

2. Landschaftspflegegerät nach Anspruch 1, **dadurch gekennzeichnet, dass** die Lagerplatten (16, 17) den Innenflächen der Seitenwände (12, 13) des Maschinengehäuses zugeordnet sind, vorzugsweise anliegend zugeordnet sind.

3. Landschaftspflegegerät nach Anspruch 1, **dadurch gekennzeichnet, dass** die Lagerplatten (16, 17) langgestreckte Bauteile sind, und dass an den Stirnenden nach außen offene Ausnehmungen vorgesehen sind.

4. Landschaftspflegegerät nach Anspruch 3, **dadurch gekennzeichnet, dass** die Ausnehmungen in den Lagerplatten (16, 17) einer Seite auf Bolzen (18, 19) aufgesetzt sind, die ortsfest an den Innenflächen der Seitenwände (12, 13) des Maschinengehäuses angesetzt oder angeformt sind, und dass durch die gegenüberliegenden Ausnehmungen eine Verbindungsstange (20) geführt ist, deren Stirnendbereiche in nach unten offenen Ausnehmungen der Seitenwände (12, 13) des Maschinengehäuses liegen.

5. Landschaftspflegegerät nach Anspruch 4, **dadurch gekennzeichnet, dass** die Bolzen (18, 19), in Fahrtrichtung des Landschaftspflegegerätes gesehen, hinter der Werkzeugwelle (10) und die Verbindungsstange (20) vor der Werkzeugwelle (10) liegen bzw. liegt.

6. Landschaftspflegegerät nach Anspruch 4, **dadurch gekennzeichnet, dass** die Positioniereinrichtung (21, 22) an die Verbindungsstage (20) angreift.

7. Landschaftspflegegerät nach Anspruch 4, **dadurch gekennzeichnet, dass** der Verbindungsstange (20) eine Ausrichtvorrichtung für jede Lagerplatte (16, 17) zugeordnet ist.

8. Landschaftspflegegerät nach Anspruch 7, **dadurch gekennzeichnet, dass** die Endbereiche der Verbindungsstange (20) mit Gewinde versehen sind, und dass auf die Endbereiche jeweils zwei Muttern aufgedreht sind, zwischen denen die Endbereiche der Lagerplatten (16, 17) liegen.

9. Landschaftspflegegerät nach einem oder mehreren der vorhergehenden Ansprüche 1 bis 8, **dadurch gekennzeichnet, dass** an den Innenflächen der Seitenwände (12, 13) des Maschinengehäuses nahe der Werkzeugwelle (10) Anschläge (24) angeformt sind, gegen die die Lagerplatten (16, 17) durch die Positioniereinrichtung (21, 22) ziehbar sind.

10. Landschaftspflegegerät nach einem oder mehreren der vorhergehenden Ansprüche 1 bis 9, **dadurch gekennzeichnet, dass** die Lagerplatten (16, 17) im Bereich der Lager (14, 15) für die Werkzeugwelle (10) mit sich nach oben streckenden Erhöhungen versehen sind, und dass in den Seitenwänden (12, 13) des Maschinengehäuses entsprechende, nach unten geöffnete Ausnehmungen vorgesehen sind.

11. Landschaftspflegegerät nach einem oder mehreren der vorhergehenden Ansprüche 1 bis 10, **dadurch gekennzeichnet, dass** die Lagerplatten (16, 17) mit nach außen sich erstreckenden Tragbügeln (25, 26) oder Traggriffen ausgestattet sind.

12. Landschaftspflegegerät nach Anspruch 7, **dadurch gekennzeichnet, dass** die Endbereiche der Verbindungsstange (20) mit den Lagerplatten (16, 17) verschweißt sind.

## Claims

1. Landscaping apparatus, in particular a scarifier, having a machine housing, which has two spaced-apart side walls (12, 13) between which there runs a tool shaft (10) which is fitted with tools (11), can be driven in rotation and the end sides of which are mounted in bearings (14, 15), **characterized in that** the bearings (14, 15) of the tool shaft (10) are inserted in bearing plates (16, 17), which are held in a form-fitting manner on the side walls (12, 13) of the machine housing and are fixed in the correct position with respect to the side walls (12, 13) by means of a positioning device (21, 22), and **in that** the positioning device (21, 22) is formed substantially of a retaining hook (21) and a positionally fixed clamping lever (22) which is preferably fastened to the outside of the machine housing.

2. Landscaping apparatus according to Claim 1, **characterized in that** the bearing plates (16, 17) are assigned, preferably in an abutting manner, to the inner surfaces of the side walls (12, 13) of the machine housing.

3. Landscaping apparatus according to Claim 1, **characterized in that** the bearing plates (16, 17) are elongate components and **in that** recesses which are open to the outside are provided at the end sides.

4. Landscaping apparatus according to Claim 3, **characterized in that** the recesses in the bearing plates (16, 17) on one side are placed on bolts (18, 19) which are attached to or integrally formed on the inner surfaces of the side walls (12, 13) of the machine housing in a positionally fixed manner, and **in that** a connecting rod (20) is passed through the opposite recesses, the end-side regions of which connecting rod (20) lie in downwardly open recesses in the side walls (12, 13) of the machine housing.

5. Landscaping apparatus according to Claim 4, **characterized in that**, as seen in the direction of travel of the landscaping apparatus, the bolts (18, 19) lie behind the tool shaft (10) and the connecting rod (20) lies in front of the tool shaft (10).

6. Landscaping apparatus according to Claim 4, **characterized in that** the positioning device (21, 22) acts on the connecting rod (20).

7. Landscaping apparatus according to Claim 4, **characterized in that** the connecting rod (20) is assigned an aligning device for each bearing plate (16, 17).

8. Landscaping apparatus according to Claim 7, **characterized in that** the end regions of the connecting rod (20) are threaded, and **in that** in each case two nuts, between which the end regions of the bearing plates (16, 17) lie, are screwed onto the end regions.

9. Landscaping apparatus according to one or more of the preceding Claims 1 to 8, **characterized in that** stops (24), against which the bearing plates (16, 17) can be pulled by the positioning device (21, 22), are integrally formed on the inner surfaces of the side walls (12, 13) of the machine housing close to the tool shaft (10).

10. Landscaping apparatus according to one or more of the preceding Claims 1 to 9, **characterized in that** the bearing plates (16, 17) are provided with upwardly extending elevations in the region of the bearings (14, 15) for the tool shaft (10), and **in that** corresponding, downwardly open recesses are provided in the side walls (12, 13) of the machine housing.

11. Landscaping apparatus according to one or more of the preceding Claims 1 to 10, **characterized in that** the bearing plates (16, 17) are equipped with outwardly extending carrying brackets (25, 26) or carrying handles.

12. Landscaping apparatus according to Claim 7,
**characterized in that** the end regions of the connecting rod (20) are welded to the bearing plates (16, 17).

## Revendications

1. Appareil pour l'aménagement paysager, en particulier un scarificateur, avec un bâti de machine qui présente deux parois latérales (12, 13) espacées, entre lesquelles s'étend un arbre d'outil (10) équipé d'outils (11), pouvant être entraîné de manière rotative, dont les extrémités frontales sont logées dans des paliers (14, 15), **caractérisé en ce que** les paliers (14, 15) de l'arbre d'outil (10) sont insérés dans des plaques de palier (16, 17) qui sont maintenues par correspondance de formes sur les parois latérales (12, 13) du bâti de machine et sont fixées en bonne position à l'aide d'un dispositif de positionnement (21, 22) par rapport aux parois latérales (12, 13), et **en ce que** le dispositif de positionnement (21, 22) est essentiellement formé d'un crochet d'arrêt (21) et d'un levier de serrage (22) fixe qui est fixé de préférence côté extérieur sur le bâti de machine.

2. Appareil pour l'aménagement paysager selon la revendication 1, **caractérisé en ce que** les plaques de palier (16, 17) sont associées, de préférence de manière adjacente aux surfaces intérieures des parois latérales (12, 13) du bâti de machine.

3. Appareil pour l'aménagement paysager selon la revendication 1, **caractérisé en ce que** les plaques de palier (16, 17) sont des composants étirés en longueur et **en ce que** sur les extrémités frontales sont prévus des évidements ouverts vers l'extérieur.

4. Appareil pour l'aménagement paysager selon la revendication 3, **caractérisé en ce que** les évidements dans les plaques de palier (16, 17) d'un côté sont posés sur des boulons (18, 19) qui sont mis en place ou formés fixement sur les surfaces intérieures des parois latérales (12, 13) du bâti de machine et **en ce que** par les évidements opposés est guidée une tige de raccordement (20), dont les zones d'extrémité frontale se trouvent dans des évidements ouverts vers le bas des parois latérales (12, 13) du bâti de machine.

5. Appareil pour l'aménagement paysager selon la revendication 4, **caractérisé en ce que** les boulons (18, 19) vu dans le sens de la marche de l'appareil pour l'aménagement paysager, se trouvent derrière l'arbre d'outil (10) et la tige de raccordement (20) se trouve devant l'arbre d'outil (10).

6. Appareil pour l'aménagement paysager selon la revendication 4, **caractérisé en ce que** le dispositif de positionnement (21, 22) saisit la tige de raccordement (20).

7. Appareil pour l'aménagement paysager selon la revendication 4, **caractérisé en ce qu'**à la tige de raccordement (20) est associé un dispositif d'alignement pour chaque plaque de palier (16, 17).

8. Appareil pour l'aménagement paysager selon la revendication 7, **caractérisé en ce que** les zones d'extrémité de la tige de raccordement (20) sont pourvues d'un filetage et **en ce que** respectivement deux écrous sont dévissés sur les zones d'extrémité, entre lesquels les zones d'extrémité des plaques de palier (16, 17) se trouvent.

9. Appareil pour l'aménagement paysager selon l'une ou plusieurs quelconques des revendications précédentes 1 à 8, **caractérisé en ce que** sur les surfaces intérieures des parois latérales (12, 13) du bâti de machine près de l'arbre d'outil (10) sont formées des butées (24), contre lesquelles les plaques de palier (16, 17) peuvent être tirées par le dispositif de positionnement (21, 22).

10. Appareil pour l'aménagement paysager selon l'une ou plusieurs quelconques des revendications précédentes 1 à 9, **caractérisé en ce que** les plaques de palier (16, 17) sont pourvues dans la zone des paliers (14, 15) pour l'arbre d'outil (10) d'élévations s'étendant vers le haut et **en ce que** dans les parois latérales (12, 13) du bâti de machine sont prévus des évidements correspondants, ouverts vers le bas.

11. Appareil pour l'aménagement paysager selon l'une ou plusieurs quelconques des revendications précédentes 1 à 10, **caractérisé en ce que** les plaques de palier (16, 17) sont équipées d'étriers de suspension (25, 26) ou poignées s'étendant vers l'extérieur.

12. Appareil pour l'aménagement paysager selon la revendication 7, **caractérisé en ce que** les zones d'extrémité de la tige de raccordement (20) sont soudées aux plaques de palier (16, 17).
